# EUROPÄISCHE PATENTSCHRIFT

(11) **EP 2 081 197 B1**
(45) Veröffentlichungstag und Bekanntmachung des Hinweises auf die Patenterteilung: **01.09.2010**
(21) Anmeldenummer: 08021773.0
(22) Anmeldetag: 16.12.2008
(51) Int. Cl.: H01C 10/10, G01B 7/14, G01D 5/14

(54) **Vorrichtung zur Erfassung des Orts einer Zusammendrückstelle**
Device for recording the location of a pressing point
Dispositif de détermination de l'emplacement d'un point de compression

(30) Priorität: 15.01.2008 DE 102008004347
(43) Veröffentlichungstag der Anmeldung: 22.07.2009
(73) Patentinhaber: Hoffmann + Krippner GmbH, 74722 Buchen (DE)
(72) Erfinder: Berres, Stefan, 74731 Walldürn (DE)
(74) Vertreter: Meyer-Roedern, Giso

(56) Entgegenhaltungen:
- DE-A1- 4 335 004
- DE-U1- 20 016 510
- US-A- 4 620 062

## Beschreibung

Die Erfindung betrifft eine Vorrichtung zur Erfassung des Orts einer Zusammendrückstelle mit einem ersten Träger, auf den eine elektrische Widerstandsstrecke aufgebracht ist, mit einem zweiten Träger, auf den eine Kontaktelektrode aufgebracht ist, die der Widerstandsstrecke in elektrischem Isolierabstand gegenüberliegt und durch Zusammendrücken der Träger mit der Widerstandsstrecke in elektrische Verbindung bringbar ist, und mit einer elektrischen oder elektronischen Beschaltung zur Erfassung des Orts der Zusammendrückstelle.

Eine solche Vorrichtung ist aus der DE 43 34 004 A1 bekannt.

Die DE 43 35 004 A1, DE 200 13 047 U1 und DE 100 60 013 A1 betreffen sog. Folienpotentiometer. Bei diesen Potentiometern bestehen die Träger der Widerstandsstrecke und der Kontaktelektrode aus Folienmaterial. Zwischen den Trägern ist ein Abstandshalter aus Folienmaterial angeordnet, der den Isolierabstand zwischen der Widerstandsstrecke und der Kontaktelektrode herstellt.

Zur Betätigung eines Folienpotentiometers werden die Träger der Widerstandsstrecke und der Kontaktelektrode zusammengedrückt. Das geschieht zumeist durch Niederdrücken des Trägers der Kontaktelektrode, der dazu fingerbetätigt oder mit einem Stößel beaufschlagt sein kann.

Beim Zusammendrücken der Träger von Widerstandsstrecke und Kontaktelektrode entstehen Dellen in dem Folienmaterial, die sich nur langsam und bisweilen gar nicht restlos rückverformen. Alle gebräuchlichen Folienmaterialien haben in ihrem Rückverformungsverhalten einen mehr oder weniger ausgeprägten Temperaturgang. Je höher die Temperatur, desto plastischer die Folie. Durch den Temperaturgang des Rückverformungsverhaltens kann die Linearität des Potentiometers beeinträchtigt werden.

Nach der WO 2007/016 281 A2 ist bei einem druckbetätigten Potentiometer an der Fläche, auf die zur Betätigung Druck ausgeübt wird, ein Abdeckmaterial (shielding material) befestigt. Dieses Material soll die Funktionstüchtigkeit und Zuverlässigkeit des Potentiometers in Hochtemperaturbereichen und unter dem Verschleiß verbessern, dem das Potentiometer durch den Betätigungsdruck unterliegt. Als besonders dauerhafte und hitzebeständige Abdeckmaterialien sind Borsilikat und Glasfaser genannt.

Ausgehend von dem Stand der Technik der DE 43 35 004 A1, ist es Aufgabe der Erfindung, die mechanischen und damit auch die elektrischen Eigenschaften der bekannten Vorrichtung zu verbessern.

Bei der diese Aufgabe lösenden Vorrichtung ist wenigstens einer der Träger von Widerstandsstrecke und/oder Kontaktelektrode mit einem bündig daran angebrachten, flachen Federblatt aus Federblech belegt, das den Zusammendrückbereich der Träger überdeckt.

Das Federblatt dient zum mechanischen Schutz der Vorrichtung. Es wird bei deren Betätigung durch Zusammendrücken der Träger mit verformt. Die zusätzliche Anbringung des Federblatts mag daher zwar die erforderliche Betätigungskraft erhöhen. Die Schaltschwelle der Vorrichtung läßt sich jedoch präziser einstellen, und es wird die Größe der Berührzone zwischen Widerstandsstrecke und Kontaktelektrode potentiell erhöht und das Schaltverhalten der Vorrichtung geglättet. Nicht zuletzt wirkt das bündig an dem Träger aus Folienmaterial angebrachte Federblatt sehr effektiv als Rückstellfeder, die die bei Betätigung der Vorrichtung entstehende Delle prompt rückverformt und dabei keinen nennenswerten Temperaturgang zeigt. Die Linearität der Vorrichtung ist daher temperaturstabil bzw. durch Temperatureinflüsse nicht nennenswert beeinträchtigt.

Das Federblatt besteht aus Federblech, insbesondere Stahlblech, von wohldefinierter Dicke. Es kann verschiedene geometrische Formen und Größen haben.

Bei einer bevorzugten Ausführungsform ist das Federblatt in Form einer Abdeckung an der Außenseite eines Trägers angebracht, die dem anderen Träger abgewandt ist. Das Federblatt kann aber auch an der Innenseite eines Trägers angebracht sein, die dem anderen Träger zugewandt ist.

Bei einer bevorzugten Ausführungsform besteht wenigstens einer der Träger von Widerstandsstrecke und Kontaktelektrode aus Folienmaterial. Der aus Folienmaterial bestehende Träger ist mit einem Federblatt belegt.

Bei einer bevorzugten Ausführungsform ist wenigstens einer der Träger von Widerstandsstrecke und Kontaktelektrode eine Leiterplatte.

Bei einer bevorzugten Ausführungsform bestehen die Träger von Widerstandsstrecke und Kontaktelektrode beide aus Folienmaterial. Zwischen den Trägern ist ein Abstandshalter angeordnet, der den Isolierabstand zwischen der Widerstandsstrecke und der Kontaktelektrode herstellt. Dieser Aufbau entspricht dem eines Folienpotentiometers.

Bei einer bevorzugten Ausführungsform besteht der Abstandshalter ebenso wie die Träger von Widerstandsstrecke und Kontaktelektrode aus Folienmaterial. Als Abstandshalter kommt aber auch ein Aufdruck auf dem Träger von Widerstandsstrecke und/oder Kontaktelektrode in Betracht.

Herkömmliche Folienpotentiometer können sowohl bei der Herstellung mit dem Federblatt ausgerüstet, als auch mit dem Federblatt nachgerüstet werden. Das Federblatt kann direkt auf das Folienpotentiometer aufgebracht werden, z. B. durch Kleben. Es verhindert Druckstellen in dem Folienmaterial, und es stellt eine definierte Druckfederkraft sicher. Ermüdungserscheinungen der Folien durch Temperatur und Dauerbelastung werden kompensiert und Verkratzungen und Beschädigungen durch äußere Einflüsse stark vermindert.

Bei einer bevorzugten Ausführungsform ist der Träger der Kontaktelektrode mit einem Federblatt belegt.

Bei einer bevorzugten Ausführungsform ist der Träger der Widerstandsstrecke mit einem Federblatt belegt.

Bei einer bevorzugten Ausführungsform sind die Träger von Widerstandsstrecke und Kontaktelektrode beide mit einem Federblatt belegt.

Bei einer bevorzugten Ausführungsform ist das Federblatt an den Träger von Widerstandsstrecke und/oder Kontaktelektrode angeklebt. Vorzugsweise belegt das Federblatt den Träger mit Ausnahme einer Kontaktfahne wenigstens annähernd vollflächig.

Bei einer bevorzugten Ausführungsform ist das Federblatt an dem Träger von Widerstandsstrecke und/oder Kontaktelektrode mit einer Deckfolie befestigt.

Wenn sich das Federblatt an der Innenseite des Trägers von Widerstandsstrecke und/oder Kontaktelektrode befindet, kann es auch allein lagefixiert sein.

Bei dem Folienmaterial kann es sich um FR4, Kapton, PI oder PET handeln. Es kommen aber auch andere Folienmaterialien mit ähnlichen Eigenschaften in Betracht.

Bei einer bevorzugten Ausführungsform ist die Vorrichtung ein Potentiometer mit einer Abgriffselektrode.

Als Abgriffselektrode kann die Kontaktelektrode an dem zweiten Träger der Vorrichtung herangezogen werden. Die Widerstandsstrecke an dem ersten Träger ist dann vorzugsweise elektrisch doppelpolig und die Kontaktelektrode an dem zweiten Träger elektrisch einpolig angeschlossen.

Die Abgriffselektrode kann aber auch der Widerstandsstrecke benachbart auf den ersten Träger der Vorrichtung aufgebracht sein, wobei Widerstandsstrecke und Abgriffselektrode vorzugsweise kämmen. Die Widerstandsstecke ist dann an dem ersten Träger vorzugsweise elektrisch doppelpolig und die Abgriffselektrode an dem ersten Träger vorzugsweise elektrisch einpolig angeschlossen.

Die Vorrichtung kann sich mit dem Finger, mit einem mechanischen Schleifer oder magnetisch betätigen lassen.

Die Erfindung wird im folgenden anhand von sechs in der Zeichnung dargestellten Ausführungsbeispielen näher erläutert. In Form perspektivischer Explosionszeichnungen zeigen
- Fig. 1: ein Folienpotentiometer mit einem an den Träger der als Ab- griffselektrode dienenden Kontaktelektrode angeklebten Feder- blatt;
- Fig. 2: ein Potentiometer, bei dem als Träger der Widerstandsstrecke eine Leiterplatte und als Träger der als Abgriffselektrode dienenden Kontaktelektrode eine Folie vorgesehen und an letz- tere ein außen Federblatt angeklebt ist;
- Fig. 3: ein Folienpotentiometer, an dem ein Federblatt mit einer Deck- folie befestigt ist ;
- Fig. 4: ein Folienpotentiometer, bei dem die Träger der Widerstands- strecke und der als Abgriffselektrode dienenden Kontaktelek- trode außen mit Federblättern belegt sind;
- Fig. 5: ein Folienpotentiometer wie in Fig. 4, bei dem der Träger der als Abgriffselektrode dienenden Kontaktelektrode innen mit ei- nem Federblatt belegt ist; und
- Fig. 6: ein Folienpotentiometer, bei dem die Abgriffselektrode auf den Träger der Widerstandsstrecke aufgebracht und an den Trägern der Widerstandsstrecke und Kontaktelektrode je ein Federblatt angeklebt ist.

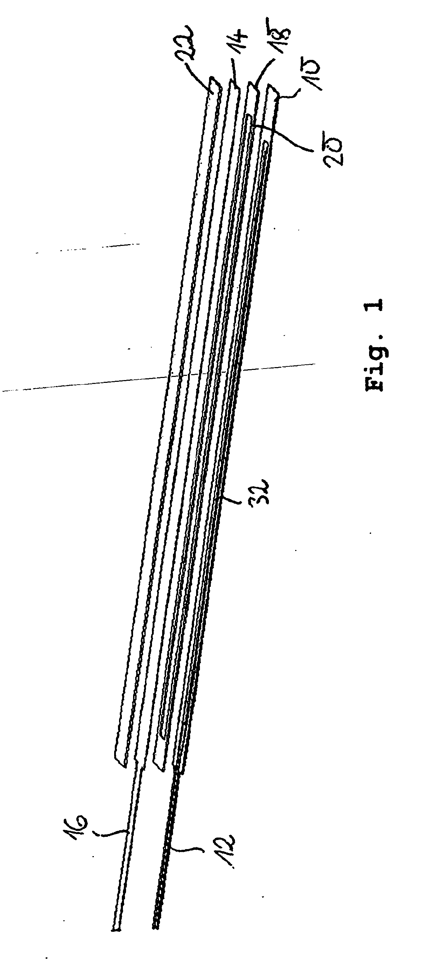

Das Folienpotentiometer gemäß Fig. 1 hat einen Träger 10 für eine Widerstandsstrecke 32, der aus Folienmaterial besteht. Der Träger 10 ist länglich-rechteckig und die Widerstandsstrecke 32 gerade. An der einen Schmalseite des Trägers 10 steht in dessen Verlängerung eine etwas schmalere Kontaktfahne 12 ab, die zwei parallele Leiterbahnen 36 zur beidendigen, doppelpoligen Kontaktierung der Widerstandsstrecke 32 trägt.

Dem Träger 10 der Widerstandsstrecke 32 liegt ein formgleicher, gleich großer zweiter Träger 14 für eine Kontaktelektrode gegenüber, die als Abgriffselektrode des Potentiometers dient. Auch der zweite Träger 14 besteht aus Folienmaterial. Die Kontaktelektrode ist gerade. Sie erstreckt sich, dem Bahnverlauf der Widerstandsstrecke folgend, mittig und in gleicher Länge über die Widerstandsstrecke 32. Der zweite Träger 14 hat an der gleichen Schmalseite wie der erste Träger 10 eine Kontaktfahne 16, die eine Leiterbahn zur einpoligen Kontaktierung der Kontaktelektrode trägt. Die Kontaktfahne 16 ist etwas schmaler als der zweite Träger 14, und sie steht in dessen Verlängerung davon ab.

Zwischen den Trägern 10, 14 liegt ein Abstandshalter 18 aus Folienmaterial. Der Abstandshalter 18 ist mit den Trägern 10, 14 form- und deckungsgleich. Er hat einen mittigen Längsschlitz 20, an dem sich die Träger 10, 14 zusammendrücken lassen, um die Widerstandsstrecke 32 und die Kontaktelektrode in elektrische Verbindung miteinander zu bringen. In nicht zusammengedrücktem Zustand liegen sich die Widerstandsstrecke 32 und die Kontaktelektrode in einem elektrischen Isolierabstand gegenüber, der durch die Dicke des Abstandshalters 18 gewährleistet ist.

An der dem Träger 10 der Widerstandsstrecke 32 abgewandten Außenseite des Trägers 14 der Kontaktelektrode sitzt ein länglich-rechteckiger Streifen 22 Federstahlblech, der bündig an den Träger 14 der Kontaktelektrode angeklebt ist. Der Streifen 22 ist mit letzterem Träger 14 form- und deckungsgleich. Er belegt den Träger 14 vollflächig und läßt nur dessen Kontaktfahne 16 frei.

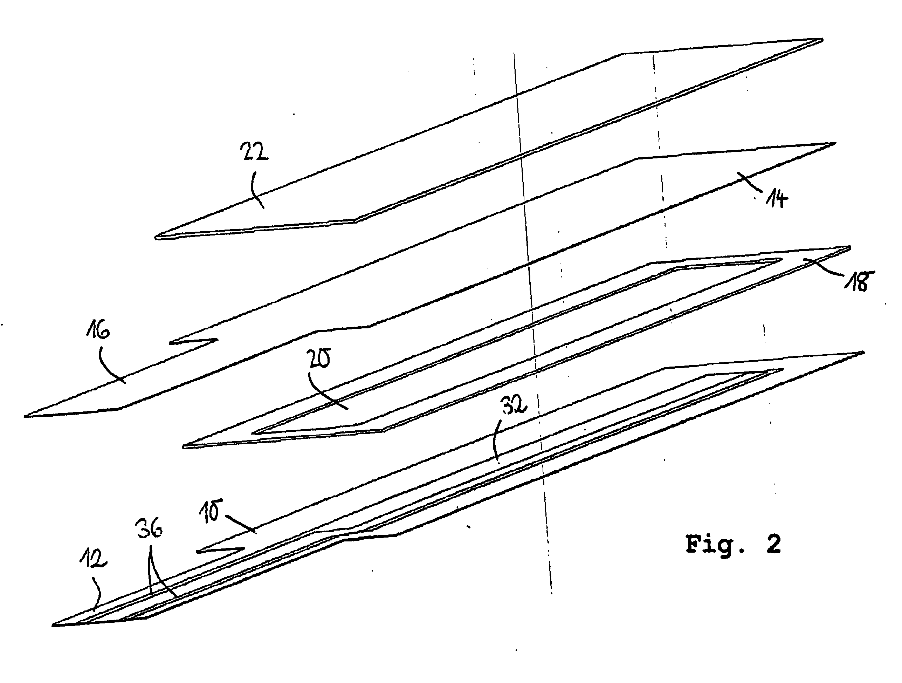

Bei dem Potentiometer gemäß Fig. 2 ist der Träger 10 der Widerstandsstrecke 32 eine Leiterplatte. Im übrigen entspricht der Aufbau des Potentiometers dem gemäß Fig. 1.

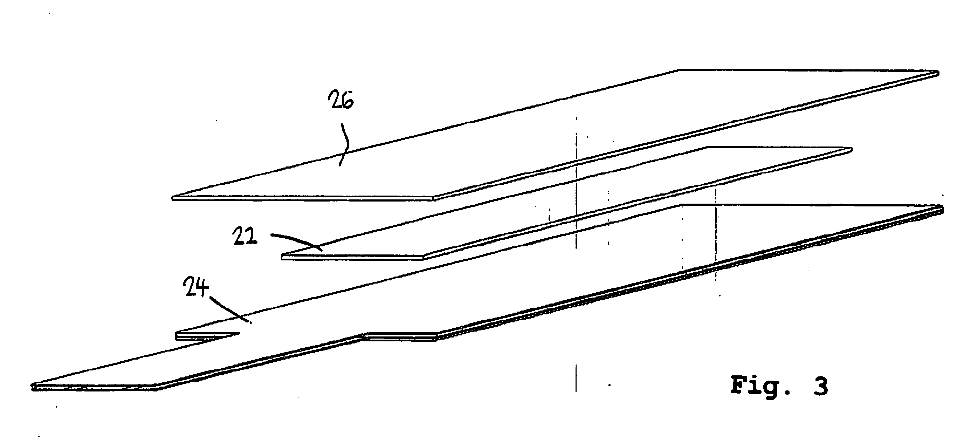

Fig. 3 zeigt ein Folienpotentiometer 24, bei dem das rechteckige Federblatt 22 in Länge und Breite kleiner ist als die Rechteckfläche der Träger 10, 14 von Widerstandsstrecke 32 und Kontaktelektrode. Das Federblatt 22 liegt mittig auf dem Folienpotentiometer 24 auf. Es ist mit einer Deckfolie 26 an dem Folienpotentiometer 24 gehalten, die rechteckigen Grundriß hat und in ihrer Größe der der Rechteckfläche der Träger 10, 14 von Widerstandsstrecke und Kontaktelektrode entspricht.

Die Deckfolie 26 hat rings um das Federblatt 22 eine Berührzone mit dem Folienpotentiometer 24, an der Haftung besteht - sei es durch beim Aufbringen der Deckfolie 26 entstehenden Unterdruck, elektrostatische Kräfte, eine Zwischenschicht Klebstoff oder den durch thermisches Ansiegeln der Deckfolie 26 erhaltenen Materialverbund.

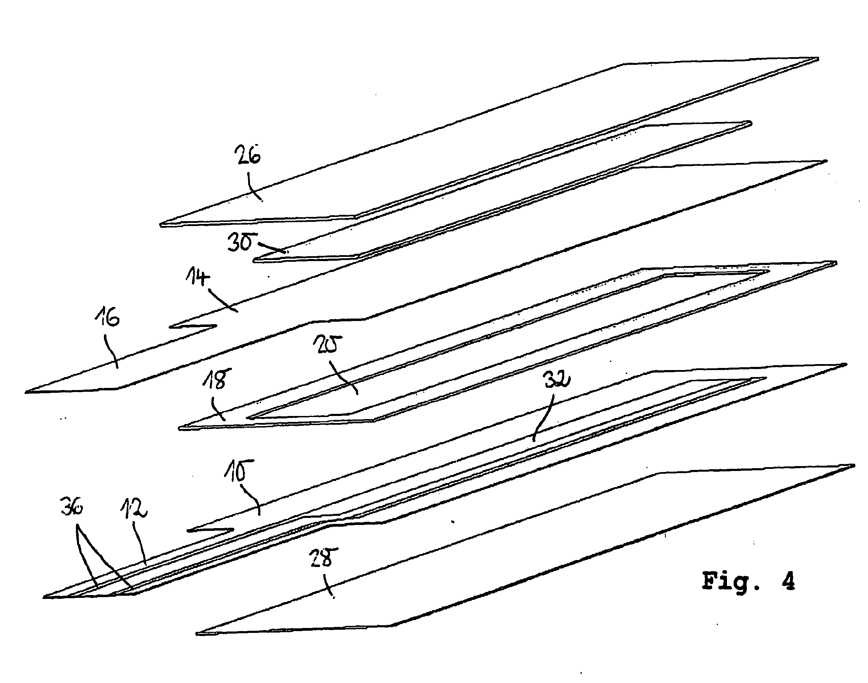

Bei dem Folienpotentiometer gemäß Fig. 4 sind die Träger 10, 14 von Widerstandsstrecke 32 und Kontaktelektrode mit je einem Federblatt 28, 30 belegt. Das Federblatt 28 an dem Träger 10 der Widerstandsstrecke 32 ist mit dessen Rechteckfläche form- und deckungsgleich und daran angeklebt. Das Federblatt 30 an dem Träger 14 der Kontaktelektrode ist kleiner und mit einer Deckfolie 26 daran befestigt.

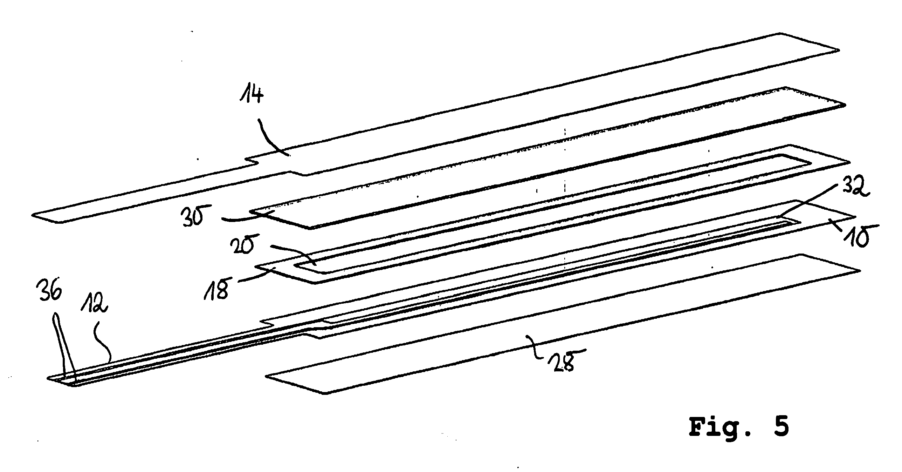

Bei dem Folienpotentiometer gemäß Fig. 5 ist der Träger 14 der Kontaktelektrode an der Innenseite mit einem angeklebten Federblatt 30 versehen. Der elektrische Kontakt wird über das Federblatt 30 hergestellt.

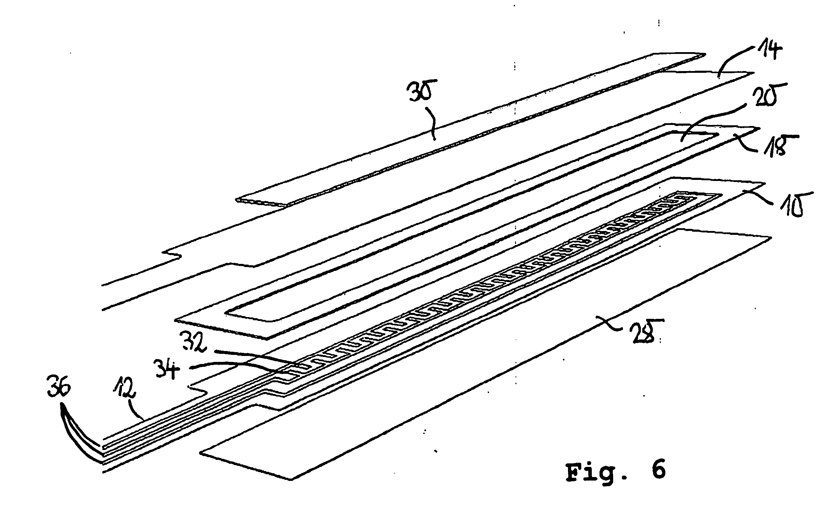

Bei dem Folienpotentiometer gemäß Fig. 6 ist auf einen länglichrechteckigen Träger 10, der aus Folienmaterial besteht, eine elektrische Widerstandsstrecke 32 und eine Abgriffselektrode 34 aufgebracht. Die Widerstandsstrecke 32 hat die Form eines Kamms mit schmalen Zinken und Lücken dazwischen. Sie ist beidendig, doppelpolig kontaktiert. Die Abgriffselektrode 34 bildet eignen Kamm, dessen Zinken in die Lücken zwischen den Zinken der Widerstandsstrecke 32 eingreifen. Die Abgriffselektrode 34 ist einendig, einpolig kontaktiert. Zur Kontaktierung steht an der einen Schmalseite des Trägers 10 in dessen Verlängerung eine etwas schmalere Kontaktfahne 12 ab, die drei parallele Leiterbahnen 36 trägt.

Dem Träger 10 der Widerstandsstrecke 32 und Abgriffselektrode 34 liegt ein formgleicher, gleich großer zweiter Träger 14 für eine Kontaktelektrode gegenüber. Der zweite Träger 14 besteht ebenfalls aus Folienmaterial. Die Kontaktelektrode ist gerade. Sie erstreckt sich mittig über die Widerstandsstrecke 32 und Abgriffselektrode 34.

Die Kontaktelektrode ist nicht elektrisch angeschlossen.

Zwischen den Trägern 10, 14 liegt ein Abstandshalter 18 aus Folienmaterial. Der Abstandshalter 18 ist mit den Trägern 10, 14 form- und deckungsgleich. Er hat einen mittigen Längsschlitz 20, an dem sich die Träger 10, 14 zusammendrücken lassen. Dabei stellt die Kontaktelektrode an der Zusammendrückstelle eine elektrische Verbindung zwischen benachbarten Zinken von Widerstandsstrecke 32 und Abgriffselektrode 34 her. In nicht zusammengedrücktem Zustand liegen sich die Träger 10, 14 in einem elektrischen Isolierabstand gegenüber, der durch die Dicke des Abstandshalters 18 gewährleistet ist.

An der dem Träger 14 der Kontaktelektrode abgewandten Außenseite des Trägers 10 von Widerstandsstrecke 32 und Abgriffselektrode 34 ist ein länglich-rechteckiges Federblatt 28 angeklebt. Das Federblatt 28 ist mit der Rechteckfläche des Trägers 10 form- und deckungsgleich. Es belegt den Träger 10 vollflächig und läßt nur die Kontaktfahne 12 frei.

An die Außenseite des Trägers 14 der Kontaktelektrode ist ein zweites Federblatt 30 angeklebt, das schmaler und kürzer als der Träger 14 ist. Das Federblatt 30 ist mittig auf der Rechteckfläche des Trägers 14 plaziert, so daß es den Zusammendrückbereich der Träger 10, 14 überdeckt. Das Federblatt 30 läßt die Fahne 38 des zweiten Trägers 14 frei.

### Liste der Bezugszeichen

- 10: Träger der Widerstandsstrecke
- 12: Kontaktfahne
- 14: Träger der Kontaktelektrode
- 16: Kontaktfahne
- 18: ASstandshäTter
- 20: Längsschlitz
- 22: Streifen Federstahlblech, Federblatt
- 24: Folienpotentiometer
- 26: Deckfolie
- 28: Federblatt
- 30: Federblatt
- 32: Widerstandsstrecke
- 34: Abgriffselektrode
- 36: Leiterbahn

## Patentansprüche

1. Vorrichtung zur Erfassung des Orts einer Zusammendrückstelle mit einem ersten Träger (10), auf den eine elektrische Widerstandsstrecke (32) aufgebracht ist, mit einem zweiten Träger (14), auf den eine Kontaktelektrode aufgebracht ist, die der Widerstandsstrecke (32) in elektrischem Isolierabstand gegenüberliegt und durch Zusammendrücken der Träger (10, 14) mit der Widerstandsstrecke (32) in elektrische Verbindung bringbar ist, und mit einer elektrischen oder elektronischen Beschaltung zur Erfassung des Orts der Zusammendrückstelle, **dadurch gekennzeichnet, daß** wenigstens einer der Träger (10, 14) mit einem bündig daran angebrachten, flachen Federblatt (22, 28, 30) aus Federblech belegt ist, das den Zusammendrückbereich der Träger (10, 14) überdeckt.

2. Vorrichtung nach Anspruch 1, **dadurch gekennzeichnet, daß** das Federblatt (22, 28, 30) an der Außenseite eines Trägers (10, 14) angebracht ist, die dem anderen Träger (10, 14) abgewandt ist.

3. Vorrichtung nach Anspruch 1 oder 2, **dadurch gekennzeichnet, daß** das Federblatt (22, 28, 30) an der Innenseite eines Trägers (10, 14) angebracht ist, die dem anderen Träger (10, 14) zugewandt ist.

4. Vorrichtung nach einem der Ansprüche 1 bis 3, **dadurch gekennzeichnet, daß** wenigstens einer der Träger (10, 14) von Widerstandsstrecke (32) und Kontaktelektrode aus Folienmaterial besteht und mit einem Federblatt (22, 28, 30) belegt ist.

5. Vorrichtung nach einem der Ansprüche 1 bis 4, **dadurch gekennzeichnet, daß** wenigstens einer der Träger (10, 14) von Widerstandsstrecke (32) und Kontaktelektrode eine Leiterplatte ist.

6. Vorrichtung nach einem der Ansprüche 1 bis 4, **dadurch gekennzeichnet, daß** die Träger (10, 14) von Widerstandsstrecke (32) und Kontaktelektrode beide aus Folienmaterial bestehen, und daß zwischen den Trägern (10, 14) ein Abstandshalter (18) vorzugsweise aus Folienmaterial angeordnet ist, der den Isolierabstand zwischen der Widerstandsstrecke (32) und der Kontaktelektrode herstellt.

7. Vorrichtung nach Anspruch 6, **dadurch gekennzeichnet, daß** der Träger (14) der Kontaktelektrode oder der Träger (10) der Widerstandsstrecke (32) oder die Träger (10, 14) von Widerstandsstrekke (32) und Kontaktelektrode beide mit einem Federblatt (22, 28, 30) belegt ist/sind.

8. Vorrichtung nach einem der Ansprüche 1 bis 7, **dadurch gekennzeichnet, daß** das Federblatt (22, 28, 30) an den Trägern (10, 14) von Widerstandsstrecke (32) und/oder Kontaktelektrode angeklebt ist und vorzugsweise den Träger (10, 14) von Widerstandsstrecke (32) und/oder Kontaktelektrode mit Ausnahme einer Kontaktfahne (12, 16) wenigstens annähernd vollflächig belegt.

9. Vorrichtung nach einem der Ansprüche 1 bis 7, **dadurch gekennzeichnet, daß** das Federblatt (22, 28, 30) an dem Träger (10, 14) von Widerstandsstrecke (32) und/oder Kontaktelektrode mit einer Deckfolie (26) befestigt ist.

10. Vorrichtung nach einem der Ansprüche 1 bis 9, **dadurch gekennzeichnet, daß** sie ein Potentiometer mit einer Abgriffselektrode ist.

11. Vorrichtung nach Anspruch 10, **dadurch gekennzeichnet, daß** die Kontaktelektrode an dem zweiten Träger (14) die Abgriffselektrode des Potentiometers ist.

12. Vorrichtung nach Anspruch 11, **dadurch gekennzeichnet, daß** die Widerstandsstrecke (32) an dem ersten Träger (10) elektrisch doppelpolig und die Kontaktelektrode an dem zweiten Träger (14) elektrisch einpolig angeschlossen ist.

13. Vorrichtung nach Anspruch 10, **dadurch gekennzeichnet, daß** die Abgriffselektrode (34) der Widerstandsstrecke (32) benachbart auf den ersten Träger (10) aufgebracht ist, wobei Widerstandsstrecke (32) und Abgriffselektrode (34) vorzugsweise kämmen.

14. Vorrichtung nach Anspruch 13, **dadurch gekennzeichnet, daß** die Widerstandsstrecke (32) an dem ersten Träger (10) elektrisch doppelpolig und die Abgriffselektrode (34) an dem ersten Träger (10) elektrisch einpolig angeschlossen ist.

15. Vorrichtung nach einem der Ansprüche 1 bis 14, **dadurch gekennzeichnet, daß** sie mit dem Finger oder mit einem mechanischen Schleifer oder magnetisch betätigbar ist.

## Claims

1. A device for detecting the location of a compression point, with a first substrate (10) on which an electrical resistive element (32) is mounted, with a second substrate (14) on which a contact electrode is mounted, which electrode is disposed opposite the resistive element (32) at an electrically insulating distance and can be brought into electrical contact with the resistive element (32) by pressing the substrates (10, 14) together, and with an electrical or electronic circuit for detecting the location of the compression point, **characterized in that** at least one of the substrates (10, 14) is equipped with a flat spring leaf (22, 28, 30) of spring-grade sheet metal, which covers the compression zone of the substrates (10, 14).

2. A device according to claim 1, **characterized in that** the spring leaf (22, 28, 30) is mounted on the outer side of a substrate (10, 14) turned away from the other substrate (10, 14).

3. A device according to claim 1 or 2, **characterized in that** the spring leaf (22, 28, 30) is mounted on the inner side of a substrate (10, 14) turned toward the other substrate (10, 14).

4. A device according to one of claims 1 to 3, **characterized in that** at least one of the substrates (10, 14) of the resistive element (32) and contact electrode is made of film material and is equipped with a spring leaf (22, 28, 30).

5. A device according to one of claims 1 to 4, **characterized in that** at least one of the substrates (10, 14) of the resistive element (32) and contact electrode is a printed-circuit board.

6. A device according to one of claims 1 to 4, **characterized in that** the substrates (10, 14) of the resistive element (32) and contact electrode are both made of film material, and **in that** between the substrates (10, 14) there is mounted a spacer (18), preferably of film material, which spacer forms the insulating distance between the resistive element (32) and the contact electrode.

7. A device according to claim 6, **characterized in that** the substrate (14) of the contact electrode or the substrate (10) of the resistive element (32) or the substrates (10, 14) of both the resistive element (32) and contact electrode is/are equipped with a spring leaf (22, 28, 30).

8. A device according to one of claims 1 to 7, **characterized in that** the spring leaf (22, 28, 30) is bonded adhesively to the substrates (10, 14) of the resistive element (32) and/or contact electrode and preferably occupies the entire surface of the substrate (10, 14) of the resistive element (32) and/or contact electrode at least approximately, except for a contact tab (12, 16).

9. A device according to one of claims 1 to 7, **characterized in that** the spring leaf (22, 28, 30) is fastened to the substrate (10, 14) of the resistive element (32) and/or contact electrode with a shielding film (26).

10. A device according to one of claims 1 to 9, **characterized in that** it is a potentiometer with a tapping electrode.

11. A device according to claim 10, **characterized in that** the contact electrode on the second substrate (14) is the tapping electrode of the potentiometer.

12. A device according to claim 11, **characterized in that** the resistive element (32) has an electrical bipolar connection to the first substrate (10) and the contact electrode has an electrical monopolar connection to the second substrate (14).

13. A device according to claim 10, **characterized in that** the tapping electrode (34) is mounted adjacent to the resistive element (32) on the first substrate (10), in such a way that the resistive element (32) and tapping electrode (34) mesh with one another.

14. A device according to claim 13, **characterized in that** the resistive element (32) has an electrical bipolar connection to the first substrate (10) and the tapping electrode (34) has an electrical monopolar connection to the first substrate (10).

15. A device according to one of claims 1 to 14, **characterized in that** it can be actuated with the finger or with a mechanical wiper or magnetically.

## Revendications

1. Dispositif de détermination de l'emplacement d'un point de compression avec un premier support (10), sur lequel est montée une section de résistance électrique (32), avec un deuxième support (14), sur lequel est montée une électrode de contact qui se trouve face à la section de résistance (32) à une distance d'isolement électrique et qui peut être mise en liaison électrique avec la section de résistance (32) par compression des supports (10, 14), et avec un câblage électrique ou électronique pour la détermination de l'emplacement du point de compression, **caractérisé en ce que** l'un au moins des supports (10, 14) est garni d'une lame de ressort (22, 28, 30) plane, montée à fleur de celui-ci, en tôle élastique qui recouvre la zone de compression des supports (10, 14).

2. Dispositif selon la revendication 1, **caractérisé en ce que** la lame de ressort (22, 28, 30) est montée sur le côté extérieur d'un support (10, 14) qui est opposé à l'autre support (10, 14).

3. Dispositif selon la revendication 1 ou 2, **caractérisé en ce que** la lame de ressort (22, 28, 30) est montée sur le côté intérieur d'un support (10, 14) qui est tourné vers l'autre support (10, 14).

4. Dispositif selon l'une quelconque des revendications 1 à 3, **caractérisé en ce que** l'un au moins des supports (10, 14) de la section de résistance (32) et de l'électrode de contact est en une matière en feuille et est garni d'une lame de ressort (22, 28, 30).

5. Dispositif selon l'une quelconque des revendications 1 à 4, **caractérisé en ce que** l'un au moins des supports (10, 14) de la section de résistance (32) et de l'électrode de contact est un circuit imprimé.

6. Dispositif selon l'une quelconque des revendications 1 à 4, **caractérisé en ce que** les supports (10, 14) de la section de résistance (32) et de l'électrode de contact sont tous deux en une matière en feuille et **en ce qu'**un écarteur (18) de préférence en une matière en feuille, qui établit la distance d'isolement entre la section de résistance (32) et l'électrode de contact, est agencé entre les supports (10, 14).

7. Dispositif selon la revendication 6, **caractérisé en ce que** le support (14) de l'électrode de contact ou le support (10) de la section de résistance (32) ou les supports (10, 14) de la section de résistance (32) et de l'électrode de contact est/sont tous deux garnis d'une lame de ressort (22, 28, 30).

8. Dispositif selon l'une quelconque des revendications 1 à 7, **caractérisé en ce que** la lame de ressort (22, 28, 30) est collée sur les supports (10, 14) de la section de résistance (32) et/ou de l'électrode de contact et garnit de préférence, au moins à peu près sur toute la surface, le support (10, 14) de la section de résistance (32) et/ou de l'électrode de contact à l'exception d'un talon de contact (12, 16).

9. Dispositif selon l'une quelconque des revendications 1 à 7, **caractérisé en ce que** la lame de ressort (22, 28, 30) est fixée sur le support (10, 14) de la section de résistance (32) et/ou de l'électrode de contact avec un film de recouvrement (26).

10. Dispositif selon l'une quelconque des revendications 1 à 9, **caractérisé en ce qu'**il s'agit d'un potentiomètre doté d'une électrode de prise.

11. Dispositif selon la revendication 10, **caractérisé en ce que** l'électrode de contact du deuxième support (14) est l'électrode de prise du potentiomètre.

12. Dispositif selon la revendication 11, **caractérisé en ce que** la section de résistance (32) est raccordée électriquement de façon bipolaire au premier support (10) et l'électrode de contact est raccordée électriquement de façon unipolaire au deuxième support (14).

13. Dispositif selon la revendication 10, **caractérisé en ce que** l'électrode de prise (34) est montée sur le premier support (10) de manière adjacente à la section de résistance (32), la section de résistance (32) et l'électrode de prise (34) s'engrenant de préférence.

14. Dispositif selon la revendication 13, **caractérisé en ce que** la section de résistance (32) est raccordée électriquement de façon bipolaire au premier support (10) et l'électrode de prise (34) est raccordée électriquement de façon unipolaire au premier support (10).

15. Dispositif selon l'une quelconque des revendications 1 à 14, **caractérisé en ce qu'**il peut être actionné par le doigt ou avec un racleur mécanique ou par voie magnétique.
